# EUROPÄISCHE PATENTANMELDUNG

(11) **EP 4 020 644 A1**
(43) Veröffentlichungstag der Anmeldung: **29.06.2022**
(21) Anmeldenummer: 21209336.3
(22) Anmeldetag: 19.11.2021
(51) Int. Cl.: H01M 8/04298, H01M 8/04992

(54) **SYSTEM UND VERFAHREN ZU EINER OPTIMIERUNG ZUMINDEST EINER ELEKTROCHEMISCHEN VORRICHTUNG**

(30) Priorität: 22.12.2020 DE 102020216471
(71) Anmelder: Robert Bosch GmbH, 70442 Stuttgart (DE)
(72) Erfinder: Kerkamm, Ingo, 70565 Stuttgart (DE); Konstandin, Alexander, 74862 Binau (DE)

(57) **Zusammenfassung**

Es wird ein System (10) zu einer Optimierung zumindest einer elektrochemischen Vorrichtung (12), insbesondere einer Brennstoffzellenvorrichtung, vorgeschlagen, aufweisend:
eine Datenbank (14) zu einer Speicherung von Daten, welche zumindest einen Datensatz bezüglich der elektrochemischen Vorrichtung (12) umfassen,
eine Erfassungseinheit (16) zu einer Erfassung der Daten,
eine Verwaltungseinheit (18) zu einem Ablegen der Daten in der Datenbank (14),
eine Triggereinheit (20) zur Bereitstellung zumindest einer Optimierungsanfrage bezüglich der elektrochemischen Vorrichtung (12),
eine Ausleseeinheit (22), welche in einem Betriebszustand Daten aus der Datenbank (14) ausliest und bereitstellt,
eine Recheneinheit (24), welche basierend auf der Optimierungsanfrage und den bereitgestellten Daten durch Anwendung von maschinellem Lernen zumindest ein Optimierungsergebnis ermittelt.

## Beschreibung

### Stand der Technik

Aus dem Stand der Technik sind Simulationen von elektrochemischen Vorrichtungen bekannt, welche beispielsweise im Rahmen einer Konstruktion von elektrochemischen Vorrichtungen eingesetzt werden.

Beispielsweise ist aus der US 2019/0173109 A1 ein Verfahren zum Betrieb eines Brennstoffzellensystems bekannt, bei welchem das Brennstoffzellensystem in Abhängigkeit von einem systemspezifischen digitalen Zwilling kontrolliert wird, der das Brennstoffzellensystem abbildet.

### Offenbarung der Erfindung

Es wird ein System zu einer Optimierung zumindest einer elektrochemischen Vorrichtung, insbesondere einer Brennstoffzellenvorrichtung, vorgeschlagen, aufweisend:
eine Datenbank zu einer Speicherung von Daten, welche zumindest einen Datensatz bezüglich der elektrochemischen Vorrichtung umfassen,
eine Erfassungseinheit zu einer Erfassung der Daten, insbesondere zumindest bezüglich der elektrochemischen Vorrichtung,
eine Verwaltungseinheit zu einem Ablegen, und insbesondere zu einem Verwalten, der Daten, insbesondere zumindest bezüglich der elektrochemischen Vorrichtung, in der Datenbank,
eine Triggereinheit zur Bereitstellung zumindest einer Optimierungsanfrage bezüglich der elektrochemischen Vorrichtung,
eine Ausleseeinheit, welche in einem Betriebszustand Daten, insbesondere zumindest einen Teil der in der Datenbank hinterlegten Daten, insbesondere bezüglich der elektrochemischen Vorrichtung aus der Datenbank ausliest und bereitstellt,
eine Recheneinheit, welche basierend auf der Optimierungsanfrage und den bereitgestellten Daten durch Anwendung von maschinellem Lernen zumindest ein Optimierungsergebnis, insbesondere bezüglich der elektrochemischen Vorrichtung, ermittelt.

Vorzugsweise ist die elektrochemische Vorrichtung als eine Brennstoffzellenvorrichtung ausgebildet. Insbesondere umfasst die Brennstoffzellenvorrichtung zumindest eine Brennstoffzelle und vorzugsweise mehrere Brennstoffzellen. Denkbar wäre zudem, dass die Brennstoffzellenvorrichtung zumindest ein Stack aus Brennstoffzellen und/oder einen Verbund mehrerer Stacks aus Brennstoffzellen und/oder ein Brennstoffzellensystem aufweist. Ohne darauf beschränkt zu sein, kann die Brennstoffzelle der Brennstoffzellenvorrichtung und/oder können die Brennstoffzellen der Brennstoffzellenvorrichtung als Hochtemperaturbrennstoffzelle, insbesondere als eine Festoxidbrennstoffzelle (SOFC), und/oder als eine Schmelzkarbonatbrennstoffzelle (MCFC) und/oder Protonenaustauschmembran-Brennstoffzelle (PEMFC), und/oder als eine Phosphorsäure-Brennstoffzelle (PAFC) und/oder als eine Direktmethanol-Brennstoffzelle (DMFC) und/oder als eine alkalische Brennstoffzelle (AFC) oder dergleichen ausgebildet sein.

Die elektrochemische Vorrichtung könnte alternativ als eine Elektrolyseurvorrichtung ausgebildet sein und zumindest einen Elektrolyseur umfassen. Der Elektrolyseur könnte zur Stoffumwandlung zumindest eines Edukts in zumindest ein Produkt unter Einsatz von elektrischem Strom, beispielsweise zu einer Chlor-Alkali-Elektrolyse oder zu einer elektrolytischen Raffination von Kupfer oder anderen Edelmetallen oder zu einer Schmelzflusselektrolyse oder zu einer Feststoffoxidelektrolyse oder für ein anderes Elektrolyseverfahren, vorgesehen sein.

Die elektrochemische Vorrichtung könnte insbesondere zumindest eine Versorgungseinheit zu einer Handhabung von Betriebsfluiden der elektrochemischen Vorrichtung, insbesondere zu einer Versorgung der zumindest einen elektrochemischen Zelle, insbesondere der zumindest einen Brennstoffzelle, mit den Betriebsfluiden und/oder zu einer Weiterleitung von aus der elektrochemischen Zelle, insbesondere aus der Brennstoffzelle, austretenden Betriebsfluiden, aufweisen. Betriebsfluide umfassen beispielsweise den Brennstoff, ein sauerstoffhaltiges Fluid, insbesondere Umgebungsluft, den Elektrolysestoff, ein Umsetzungsprodukt, insbesondere Wasser und/oder Kohlenstoffdioxid, ein Elektrolyseprodukt, insbesondere Wasserstoff, und/oder einen Reformierungszusatz, insbesondere Wasserdampf.

Die elektrochemische Vorrichtung könnte insbesondere zumindest eine Elektronikeinheit, zu einem Abgriff einer elektrischen Zellspannung und/oder eines elektrischen Zellstroms von der zumindest einen elektrochemischen Zelle, insbesondere von der zumindest einen Brennstoffzelle und/oder zu einer Versorgung der zumindest einen elektrochemischen Zelle, insbesondere der zumindest einen Brennstoffzelle mit einer elektrischen Zellspannung und/oder einem elektrischen Zellstrom, aufweisen. Vorzugsweise umfasst die elektrochemische Vorrichtung, insbesondere die Brennstoffzellenvorrichtung, zumindest eine Sensoreinheit zu einer Erfassung von Betriebsparametern der elektrochemischen Vorrichtung, insbesondere der Brennstoffzellenvorrichtung. Beispiele für von der Sensoreinheit überwachte Betriebsparameter umfassen eine Temperatur der Betriebsfluide, der elektrochemischen Zelle, insbesondere der Brennstoffzelle und/oder der Versorgungseinheit, einen Druck der Betriebsfluide, einen Strömungsparameter, insbesondere einen Volumenstrom und/oder einen Massenstrom, der Betriebsfluide, die Zellspannung und/oder den Zellstrom, einen Arbeitspunkt zumindest einer Betriebsfluidfördereinheit, insbesondere eines Kompressors, eines Ventilators und/oder einer Pumpe zur Förderung eines der Betriebsfluide, und/oder eine chemische Zusammensetzung, insbesondere einen Kohlenstoffgehalt, einen Wasserstoffgehalt, ein Verbrennungsluftverhältnis oder dergleichen, eines der Betriebsfluide.

Die elektrochemische Vorrichtung, insbesondere die Brennstoffzellenvorrichtung, umfasst insbesondere eine Steuer- oder Regeleinheit. Die Steuer- oder Regeleinheit ist insbesondere dazu vorgesehen, die zumindest eine elektrochemische Zelle, insbesondere die zumindest eine Brennstoffzelle, auf einen vorgegebenen Betriebspunkt der elektrochemischen Zelle, insbesondere der Brennstoffzelle, einzustellen und/oder zu halten. Beispielsweise, aber nicht beschränkt darauf, könnte die Steuer- oder Regeleinheit als speicherprogrammierbare Steuerung (SPS, engl.: PLC) ausgebildet sein.

Unter "vorgesehen" soll speziell eingerichtet, speziell programmiert, speziell ausgelegt und/oder speziell ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Das System zur Optimierung der zumindest einen elektrochemischen Vorrichtung umfasst eine Datenbank, welche dazu vorgesehen ist, Daten zu speichern, insbesondere dauerhaft zu speichern, welche zumindest einen Datensatz bezüglich der elektrochemischen Vorrichtung und vorzugsweise eine Vielzahl von Datensätzen bezüglich der elektrochemischen Vorrichtung umfassen. Die Datenbank könnte, jedoch ohne beschränkt darauf zu sein, zumindest teilweise als eine relationale Datenbank ausgebildet sein. Der zumindest eine Datensatz umfasst insbesondere eine Vielzahl von Datenpunkten bezüglich der elektrochemischen Vorrichtung, beispielsweise mindestens hundert Datenpunkte bezüglich der elektrochemischen Vorrichtung, vorteilhaft mindestens tausend Datenpunkte bezüglich der elektrochemischen Vorrichtung, besonders vorteilhaft mindestens zehntausend Datenpunkte bezüglich der elektrochemischen Vorrichtung, vorzugsweise mindestens zehntausend Datenpunkte bezüglich der elektrochemischen Vorrichtung und besonders bevorzugt mindestens zwanzigtausend Datenpunkte bezüglich der elektrochemischen Vorrichtung. Beispielsweise könnte die Datenbank einen Data-Lake umfassen, wobei der zumindest eine Datensatz mit der Vielzahl von Datenpunkten, welche insbesondere in Form von Rohdaten vorliegen, Teil des Data-Lakes ist. Denkbar wäre, dass die Rohdaten in proprietären Datenformaten in der Datenbank gespeichert sind. Durch den Einsatz von proprietären Datenformaten könnte insbesondere eine Datensicherheit vorteilhaft verbessert werden.

Die Daten bezüglich der elektrochemischen Vorrichtung könnten beispielsweise zumindest einen digitalen Zwilling der elektrochemischen Vorrichtung umfassen, welcher insbesondere Datensätze mit beispielsweise Einzeldaten, Kennlinien, Rechenvorschriften, insbesondere hinsichtlich Naturgesetzen, mathematischen Modellen, Korrelationen oder dergleichen zumindest über die elektrochemische Vorrichtung aufweist. Der digitale Zwilling könnte vorzugsweise zumindest einen Datensatz, welcher spezifisch für die elektrochemische Vorrichtung individuell erfasst worden ist, beispielsweise zumindest zu einem Teil durch die Sensoreinheit, enthalten. Beispielsweise umfasst der digitale Zwilling zumindest einen Datensatz, der zumindest ein Material der elektrochemischen Vorrichtung, insbesondere der zumindest einen elektrochemischen Zelle, vorzugsweise der zumindest einen Brennstoffzelle, beschreibt. Insbesondere könnten die Daten zumindest einen Datensatz enthalten, der zumindest einen Betriebsvorgang der elektrochemischen Vorrichtung, insbesondere der zumindest einen elektrochemischen Zelle, vorzugsweise der zumindest einen Brennstoffzelle, beschreibt. Insbesondere könnten die Daten zumindest einen Datensatz hinsichtlich einer Peripherie und/oder einer Umgebung der zumindest einen elektrochemischen Zelle umfassen.

Das System zur Optimierung der zumindest einen elektrochemischen Vorrichtung weist eine Erfassungseinheit auf, welche insbesondere dazu vorgesehen ist, insbesondere in einem laufenden Betrieb der elektrochemischen Zelle, insbesondere der Brennstoffzelle, Daten bezüglich der elektrochemischen Vorrichtung zu erfassen. Insbesondere wäre denkbar, dass die Erfassungseinheit in Kommunikation mit der zumindest einen Sensoreinheit der elektrochemischen Vorrichtung, insbesondere der Brennstoffzellenvorrichtung, steht. Insbesondere könnte die Sensoreinheit, insbesondere in einem laufenden Betrieb der elektrochemischen Zelle, insbesondere der Brennstoffzelle, Daten bezüglich der elektrochemischen Vorrichtung an die Erfassungseinheit weiterleiten. Die Erfassungseinheit könnte beispielsweise als eine zentrale Erfassungseinheit ausgebildet sein und somit zur zentralen Erfassung, beispielsweise durch zentrale Eingaben, der Daten vorgesehen sein. Vorzugsweise handelt es sich bei der Erfassungseinheit um eine verteilte Einheit, welche dazu vorgesehen ist, Daten, insbesondere bezüglich der elektrochemischen Vorrichtung, örtlich und/oder zeitlich verteilt zu erfassen. Beispielsweise könnte die Erfassungseinheit zumindest eine manuelle Erfassung von Daten, insbesondere bezüglich der elektrochemischen Vorrichtung, vorteilhaft durch zumindest einen Anwender des Systems, bereitstellen. Beispielsweise könnte die Erfassungseinheit zumindest eine manuelle Erfassung von Daten, insbesondere bezüglich der elektrochemischen Vorrichtung, vorteilhaft durch zumindest einen Anwender des Systems, umfassen. Alternativ oder zusätzlich könnte die Erfassungseinheit zumindest eine zumindest teilautomatisierte und insbesondere vollautomatisierte Erfassung von Daten, insbesondere bezüglich der elektrochemischen Vorrichtung, beispielsweise durch die Sensoreinheit und/oder weiteren Sensoren, welche insbesondere Teil eines Fertigungsprozesses sein könnten, umfassen.

Das System zur Optimierung der zumindest einen elektrochemischen Vorrichtung weist eine Verwaltungseinheit auf, welche insbesondere dazu vorgesehen ist, zumindest die Daten bezüglich der elektrochemischen Vorrichtung in der Datenbank abzulegen, insbesondere die Daten in der Datenbank zu speichern. Die Verwaltungseinheit ist insbesondere dazu vorgesehen, zumindest die Daten bezüglich der elektrochemischen Vorrichtung in der Datenbank zu verwalten. Beispielsweise, jedoch nicht beschränkt darauf, könnte das Verwalten zumindest der Daten bezüglich der elektrochemischen Vorrichtung in der Datenbank zumindest ein Anlegen der Daten, insbesondere der Datensätze, und/oder ein Hinzufügen der Daten, insbesondere von Datenpunkten zu Datensätzen, und/oder ein Ändern der Daten, insbesondere der Datenpunkte in den Datensätzen, und/oder ein Kategorisieren der Daten, insbesondere der Datenpunkte in den Datensätzen, und/oder ein Sortieren der Daten, insbesondere der Datenpunkte in den Datensätzen, umfassen.

Das System zur Optimierung der zumindest einen elektrochemischen Vorrichtung weist eine Triggereinheit auf, welche dazu vorgesehen ist, in einem Betriebszustand, zumindest eine Optimierungsanfrage bezüglich der elektrochemischen Vorrichtung bereitzustellen. Insbesondere stellt die Triggereinheit in dem Betriebszustand die zumindest eine Optimierungsanfrage bezüglich der elektrochemischen Vorrichtung einer Recheneinheit des Systems bereit. Insbesondere könnte die Triggereinheit die zumindest eine Optimierungsanfrage während eines insbesondere produktiven Betriebs der elektrochemischen Vorrichtung bereitstellen. Alternativ oder zusätzlich könnte die Triggereinheit die zumindest eine Optimierungsanfrage während einer Inbetriebnahme der elektrochemischen Vorrichtung bereitstellen. Alternativ oder zusätzlich könnte die Triggereinheit die zumindest eine Optimierungsanfrage im Rahmen einer Planung und/oder einer Konstruktion und/oder eines Designs der elektrochemischen Vorrichtung bereitstellen. Insbesondere könnte die Triggereinheit die Optimierungsanfrage automatisch bereitstellen. Alternativ oder zusätzlich könnte die Triggereinheit die Optimierungsanfrage bei manueller Auslösung, beispielsweise durch einen Benutzer, bereitstellen. Beispielsweise könnte die Optimierungsanfrage zumindest einen Optimierungsauslöser umfassen, welcher zumindest einen Vorgang, insbesondere einen Optimierungsvorgang, insbesondere das Ermitteln des Optimierungsergebnisses, auslöst, insbesondere startet. Beispielsweise könnte die Optimierungsanfrage zumindest einen Input umfassen, beispielsweise zumindest ein Ziel, für den Optimierungsvorgang. Beispielsweise könnte das Ziel der Optimierungsanfrage durch einen Benutzer festgelegt, insbesondere durch einen Benutzer ausgewählt, sein. Hierzu wäre denkbar, dass das System zur Optimierung der zumindest einen elektrochemischen Vorrichtung zumindest eine Benutzerschnittstelle umfasst. Die Benutzerschnittstelle könnte beispielsweise zumindest einen Computer, insbesondere zumindest eine an das System angebundene Mensch-Maschinen-Schnittstelle, beispielsweise in Form einer Programmoberfläche, umfassen. Darunter, dass die Triggereinheit die Optimierungsanfrage bereitstellt, soll verstanden werden, dass die Triggereinheit die Optimierungsanfrage an zumindest eine weitere Einheit übermittelt oder zur Übermittlung an zumindest eine weitere Einheit bereithält.

Das System zur Optimierung der zumindest einen elektrochemischen Vorrichtung weist eine Ausleseeinheit auf, welche in einem Betriebszustand, insbesondere basierend auf der durch die Triggereinheit bereitgestellten Optimierungsanfrage, Daten, insbesondere zumindest einen Teil der in der Datenbank hinterlegten Daten, insbesondere bezüglich der elektrochemischen Vorrichtung aus der Datenbank ausliest und bereitstellt. In dem Betriebszustand könnte die Ausleseeinheit beispielsweise basierend auf der Optimierungsanfrage eine Auswahl hinsichtlich der auszulesenden, in der Datenbank hinterlegten Daten, insbesondere bezüglich der elektrochemischen Vorrichtung, treffen. Vorteilhaft ist die Ausleseeinheit dazu vorgesehen, sämtliche in der Datenbank hinterlegten Daten auszulesen und bereitzustellen. Insbesondere ist die Ausleseeinheit zumindest datentechnisch mit der Datenbank verbunden und greift, insbesondere in dem Betriebszustand, auf die Datenbank zu. Denkbar wäre, ohne jedoch beschränkt darauf zu sein, dass die Ausleseeinheit die ausgelesenen Daten in einem Zwischenspeicher, insbesondere in einem Direktzugriffsspeicher, zwischenspeichert und damit insbesondere für die weitere Datenverarbeitung bereithält.

Das System zur Optimierung der zumindest einen elektrochemischen Vorrichtung weist eine Recheneinheit auf, welche basierend auf der Optimierungsanfrage und den bereitgestellten Daten durch Anwendung von maschinellem Lernen, insbesondere durch Anwendung von Methoden, welche insbesondere die Anwendung zumindest eines Algorithmus umfassen, zumindest ein Optimierungsergebnis, insbesondere bezüglich der elektrochemischen Vorrichtung, ermittelt. Unter einem "Algorithmus" soll in diesem Zusammenhang zumindest eine Rechenvorschrift verstanden werden, welche die Recheneinheit zu Ermittlung des Optimierungsergebnisses, insbesondere auf Basis der Optimierungsanfrage und Daten, anwendet. Der Algorithmus ist insbesondere derart selbstlernend ausgebildet, dass der Algorithmus zumindest ein Ergebnis einer vorhergehenden Ermittlung eines Optimierungsergebnisses bezüglich der elektrochemischen Vorrichtung miteinbezieht.

Das maschinelle Lernen könnte beispielsweise die Anwendung von überwachtem Lernen und/oder die Anwendung von unüberwachtem Lernen umfassen. Das maschinelle Lernen könnte beispielsweise, jedoch ohne beschränkt darauf zu sein, die Anwendung zumindest einer insbesondere linearen Regressionsanalyse und/oder die Anwendung einer Decision tree learning Methode, wie beispielsweise eine Classification tree Analyse und/oder eine Regression tree Analyse, und/oder die Anwendung einer Support Vector Machine und/oder die Anwendung eines Gauß-Prozesses und/oder neuronalen Netzwerks umfassen. Denkbar wäre zudem, dass das maschinelle Lernen die Anwendung von Clustering-Algorithmen und/oder k-Means-Algorithmen umfasst. Zudem könnte das maschinelle Lernen das Aufdecken von Anomalien und/oder Ausreißern in Bezug auf die Daten bezüglich der elektrochemischen Vorrichtung umfassen, beispielsweise mittels Anwendung einer Normalverteilung. Insbesondere könnte das maschinelle Lernen die Anwendung gängiger Algorithmen umfassen. Insbesondere könnte die Recheneinheit dazu vorgesehen sein, in Abhängigkeit von zur Verfügung stehenden Daten, insbesondere in Abhängigkeit von zur Verfügung stehender Datenmenge, und/oder in Abhängigkeit von der bereitgestellten Optimierungsanfrage den anzuwendenden Algorithmus auszuwählen.

Beispielsweise könnte die Datenbank und/oder die Erfassungseinheit und/oder die Verwaltungseinheit und/oder die Triggereinheit und/oder die Ausleseeinheit und/oder die Recheneinheit als Einheiten eines gemeinsamen Computers ausgebildet sein. Alternativ könnten die Datenbank und/oder die Erfassungseinheit und/oder die Verwaltungseinheit und/oder die Triggereinheit und/oder die Ausleseeinheit und/oder die Recheneinheit als Einheiten jeweils separater Computer ausgebildet sein.

Durch die erfindungsgemäße Ausgestaltung des Systems zu einer Optimierung zumindest einer elektrochemischen Vorrichtung, insbesondere einer Brennstoffzellenvorrichtung, können insbesondere verbesserte Eigenschaften hinsichtlich einer Konstruktion und/oder hinsichtlich eines Betriebs, insbesondere einer Betriebssicherheit, und/oder hinsichtlich einer Effizienz, insbesondere hinsichtlich einer Ressourceneffizienz, und/oder hinsichtlich eines Lebenszyklus, beispielsweise hinsichtlich einer Lebensdauer, zumindest einer elektrochemischen Vorrichtung, insbesondere einer Brennstoffzellenvorrichtung, erzielt, insbesondere ermittelt, werden. Beispielsweise könnte die elektrochemische Vorrichtung mit dem Ziel optimiert werden, im produktiven Betrieb weniger Ressourcen zu verbrauchen, d.h. die Effizienz zu verbessern. Zudem könnte die elektrochemische Vorrichtung beispielsweise mit dem Ziel optimiert werden, im gesamten Lebenszyklus der elektrochemischen Vorrichtung, etwa bei der Herstellung, weniger Ressourcen, beispielsweise weniger Material und/oder weniger Energie oder dergleichen zu verbrauchen. Somit kann insbesondere dadurch ein zum Betrieb einer elektrochemischen Vorrichtung notwendiger Ressourcenbedarf vorteilhaft verringert werden, dass die elektrochemische Vorrichtung basierend auf dem Optimierungsergebnis ressourcensparender produziert und/oder effizienter betrieben werden kann. Insbesondere könnte das System zur Optimierung der elektrochemischen Vorrichtung als Optimierungsergebnis den Erkenntnisgewinn ermitteln, welche Parameter im gesamten Lebenszyklus der elektrochemischen Vorrichtung verändert werden können, um eine Lebensdauer der elektrochemischen Vorrichtung und/oder eine Effizienz der elektrochemischen Vorrichtung und/oder eine Leistung der elektrochemischen Vorrichtung zu verbessern. Des Weiteren kann die elektrochemische Vorrichtung durch das vorgeschlagene System beispielsweise hinsichtlich einer Sicherheit, insbesondere hinsichtlich einer Betriebssicherheit, optimiert werden. Insbesondere könnte das System Daten einer Vielzahl von elektrochemischen Vorrichtungen, die beispielsweise historische Daten von aufgetretenen Sicherheitsproblemen anderer und/oder baugleicher elektrochemischer Vorrichtungen umfassen, berücksichtigen und dadurch beispielsweise den Einfluss bestimmter Parameter der zu optimierenden elektrochemischen Vorrichtung auf potentielle Sicherheitsprobleme ermitteln. Ferner können insbesondere dadurch Ressourcen eingespart werden, dass durch das vorgeschlagene System effizient Optimierungsergebnisse ermittelt werden können, welche ansonsten lediglich mittels einer Vielzahl von Experimenten ermittelt werden könnten. Insbesondere können Entwicklungsdauern elektrochemischer Vorrichtungen ressourcensparend verringert werden. Insbesondere kann eine Zuverlässigkeit der elektrochemischen Vorrichtung verbessert werden.

Ferner wird vorgeschlagen, dass die Recheneinheit das Optimierungsergebnis basierend auf der Optimierungsanfrage und den bereitgestellten Daten durch Anwendung von maschinellem Lernen wiederkehrend, insbesondere periodisch, automatisch ermittelt. Zudem wäre denkbar, dass insbesondere die Triggereinheit zur wiederkehrenden, insbesondere periodischen, Bereitstellung der Optimierungsanfrage vorgesehen ist. Durch eine derartige Ausgestaltung kann insbesondere eine Ressourcenschonung, insbesondere eine Rechenressourcenschonung, erzielt werden, da bei regelmäßiger Berechnung beispielsweise nur noch lediglich inkrementelle Berechnungen notwendig sind. Beispielsweise ist bei wiederkehrender, insbesondere periodischer, Ermittlung durch die Recheneinheit lediglich eine Berechnung basierend auf geänderten Daten notwendig, was eine notwendige Rechenleistung weiter reduziert. Ferner kann durch wiederkehrende, insbesondere periodische, Ermittlung beispielsweise eine Sicherheit, insbesondere hinsichtlich des Betriebs der elektrochemischen Vorrichtung, verbessert werden.

Des Weiteren wird vorgeschlagen, dass die Daten zumindest einen Datensatz hinsichtlich eines bisherigen Lebenszyklus der elektrochemischen Vorrichtung umfassen. Insbesondere ist die Erfassungseinheit zu einer Erfassung der Daten hinsichtlich des gesamten Lebenszyklus der elektrochemischen Vorrichtung vorgesehen. Zudem ist insbesondere die Verwaltungseinheit zu einem Ablegen und Verwalten der Daten hinsichtlich des gesamten Lebenszyklus der elektrochemischen Vorrichtung in der Datenbank vorgesehen. Zudem ist insbesondere die Datenbank zu einem Speichern der Daten hinsichtlich des gesamten Lebenszyklus zumindest der elektrochemischen Vorrichtung vorgesehen. Beispielsweise umfassen die Daten zumindest einen Datensatz, der ein Design der elektrochemischen Vorrichtung beschreibt. Alternativ oder zusätzlich umfassen die Daten beispielsweise zumindest einen Datensatz bezüglich einer Konstruktion der elektrochemischen Vorrichtung. Alternativ oder zusätzlich umfassen die Daten beispielsweise zumindest einen Datensatz bezüglich einer Materialbeschaffung und/oder bezüglich Materialdaten, beispielsweise Materialkenndaten und/oder Materialkonstanten, von in der elektrochemischen Vorrichtung verwendeten Materialien. Beispielsweise umfassen die Daten alternativ oder zusätzlich zumindest einen Datensatz, der eine Herstellung der elektrochemischen Vorrichtung beschreibt und/oder bei einer Herstellung erfasste Daten über die elektrochemische Vorrichtung umfasst. Alternativ oder zusätzlich umfassen die Daten beispielsweise zumindest einen Datensatz bezüglich einer Inbetriebnahme der elektrochemischen Vorrichtung und/oder bei einer Herstellung erfasste Daten über die elektrochemische Vorrichtung, wie beispielsweise Prüfdaten, Prüfprotokolle oder dergleichen. Alternativ oder zusätzlich umfassen die Daten beispielsweise zumindest einen Datensatz bezüglich einer Umgebung der elektrochemischen Vorrichtung, beispielsweise bezüglich Standortinformation oder dergleichen. Beispielsweise umfassen die Daten alternativ oder zusätzlich zumindest einen Datensatz, der einen Betrieb der elektrochemischen Vorrichtung beschreibt und/oder bei einem Betrieb der elektrochemischen Vorrichtung erfasste Daten. Alternativ oder zusätzlich umfassen die Daten beispielsweise zumindest einen Datensatz bezüglich einer Stilllegung und/oder bezüglich bisheriger Defekte und/oder bezüglich bisheriger Sicherheitsprobleme und/oder bezüglich eines Recyclings der elektrochemischen Vorrichtung. Durch eine derartige Ausgestaltung kann insbesondere eine verbesserte Zuverlässigkeit des Systems gewährleistet werden. Insbesondere kann dadurch ein Optimierungsergebnis mit umfassenderer Aussagekraft bereitgestellt werden. Ferner kann dadurch ein umfassender Erkenntnisgewinn hinsichtlich eines Zusammenhangs zwischen den Daten, die im Lebenszyklus der elektrochemischen Vorrichtung anfallen, und der Optimierungsanfrage ermittelt werden. Üblicherweise wären für derartige umfassende Optimierungsergebnisse eine Vielzahl an Experimenten notwendig, wobei durch die vorgeschlagene Ausgestaltung insbesondere diese Ressourcen eingespart werden können.

Zudem wird vorgeschlagen, dass die Daten zumindest einen weiteren Datensatz bezüglich zumindest einer weiteren elektrochemischen Vorrichtung umfassen. Insbesondere könnten die Daten zumindest einen weiteren Datensatz bezüglich einer Vielzahl von weiteren elektrochemischen Vorrichtungen, beispielsweise bezüglich zumindest zehn weiteren elektrochemischen Vorrichtungen, vorteilhaft bezüglich zumindest fünfzig weiteren elektrochemischen Vorrichtungen, besonders vorteilhaft bezüglich zumindest hundert weiteren elektrochemischen Vorrichtungen und vorzugsweise bezüglich zumindest tausend weiteren elektrochemischen Vorrichtungen umfassen. Insbesondere umfassen die Daten zumindest einen weiteren Datensatz mit historischen Datenpunkten der weiteren elektrochemischen Vorrichtung. Insbesondere könnte das System zur Optimierung mit der elektrochemischen Vorrichtung und/oder mit der zumindest einen weiteren elektrochemischen Vorrichtung vernetzt sein, beispielsweise über das Internet oder einem vergleichbaren Netzwerk. Durch eine derartige Ausgestaltung können insbesondere Optimierungsergebnisse basierend auf umfassenden Daten ermittelt werden. Hierdurch kann beispielsweise eine Sicherheit, insbesondere eine Betriebssicherheit, der elektrochemischen Vorrichtung und/oder der zumindest einen weiteren elektrochemischen Vorrichtung verbessert werden. Insbesondere könnte beispielsweise von Defekten und/oder Sicherheitsproblemen der zumindest einen weiteren elektrochemischen Vorrichtung auf potentiell bevorstehende Sicherheitsprobleme und/oder Defekte der elektrochemischen Vorrichtung geschlossen werden. Beispielsweise könnten die Daten bezüglich der weiteren elektrochemischen Vorrichtung im Umfang den Daten bezüglich der elektrochemischen Vorrichtung entsprechen.

Ferner wird vorgeschlagen, dass die Recheneinheit Teil eines Zentralservers ist. Zusätzlich könnte insbesondere zumindest ein Teil der Erfassungseinheit und/oder zumindest ein Teil der Verwaltungseinheit und/oder zumindest ein Teil der Triggereinheit und/oder zumindest ein Teil der Ausleseeinheit und/oder zumindest ein Teil der Datenbank Teil des Zentralservers sein. Insbesondere könnten durch eine derartige Ausgestaltung zumindest ein Teil der Systemfunktionen und vorzugsweise sämtliche Systemfunktionen zentral bereitgestellt werden, was insbesondere weitere Ressourceneinsparungen ermöglicht.

Des Weiteren wird vorgeschlagen, dass die Optimierungsanfrage eine Optimierungsvorgabe umfasst. Insbesondere enthält die Optimierungsvorgabe einen oder mehrere Parameter, insbesondere bezüglich der elektrochemischen Vorrichtung und/oder insbesondere bezüglich der zumindest einen weiteren elektrochemischen Vorrichtung, welche einen Input für das maschinelle Lernen der Recheneinheit ist und zu welcher die Recheneinheit das Optimierungsergebnis ermittelt. Die Optimierungsvorgabe ist insbesondere zumindest ein Parameter insbesondere bezüglich der elektrochemischen Vorrichtung und/oder insbesondere bezüglich der zumindest einen weiteren elektrochemischen Vorrichtung, welcher optimiert werden soll. Durch eine derartige Ausgestaltung ist insbesondere eine gezielte Optimierung, insbesondere der elektrochemischen Vorrichtung und/oder der zumindest einen weiteren elektrochemischen Vorrichtung, möglich. Insbesondere kann dahingehend eine Ressourceneinsparung realisiert werden, dass Entwicklungszeiten von elektrochemischen Systemen reduziert, Betriebsparameter gezielter gesetzt, und Konstruktionsparameter optimiert werden können. Beispielsweise könnte die Optimierungsvorgabe eine Effizienz der elektrochemischen Vorrichtung sein, sodass durch das vorgeschlagene System eine optimierte und verbesserte Effizienz erzielt werden kann, wodurch weiter Ressourcen eingespart werden können.

Zudem wird vorgeschlagen, dass die Optimierungsvorgabe eine Vorgabe hinsichtlich zumindest eines zu berücksichtigenden Lebenszyklusparameters, insbesondere bezüglich der elektrochemischen Vorrichtung und/oder insbesondere bezüglich der zumindest einen weiteren elektrochemischen Vorrichtung, umfasst. Beispielsweise, jedoch ohne beschränkt darauf zu sein, könnte die Optimierungsvorgabe eine Vorgabe zu einer Optimierung einer Lebensdauer der elektrochemischen Vorrichtung sein. Alternativ und ohne beschränkt darauf zu sein, könnte die Optimierungsvorgabe eine Vorgabe zu einer Optimierung einer Lebensdauer bei einer bestimmten Leistung und/oder unter bestimmten Betriebsbedingungen der elektrochemischen Vorrichtung sein. Durch eine derartige Ausgestaltung können insbesondere verbesserte Eigenschaften hinsichtlich eines Lebenszyklus der elektrochemischen Vorrichtung erzielt werden. Insbesondere kann durch eine derartige Ausgestaltung eine verbesserte Lebensdauer der elektrochemischen Vorrichtung erzielt werden, was insbesondere zu Ressourceneinsparungen führt.

Des Weiteren wird vorgeschlagen, dass die Optimierungsvorgabe eine Vorgabe hinsichtlich zumindest eines zu berücksichtigenden Betriebsparameters, insbesondere bezüglich der elektrochemischen Vorrichtung und/oder insbesondere bezüglich der zumindest einen weiteren elektrochemischen Vorrichtung, umfasst. Beispielsweise, jedoch ohne beschränkt darauf zu sein, könnte die Optimierungsvorgabe eine Vorgabe zu einer Optimierung einer Leistung der elektrochemischen Vorrichtung sein. Alternativ und ohne darauf beschränkt zu sein, könnte die Optimierungsvorgabe eine Vorgabe zu einer Optimierung einer Effizienz der elektrochemischen Vorrichtung sein. Durch eine derartige Ausgestaltung können insbesondere verbesserte Eigenschaften hinsichtlich einer Leistung und/oder Effizienz der elektrochemischen Vorrichtung erzielt werden. Insbesondere kann durch eine derartige Ausgestaltung eine verbesserte Leistung und/oder Effizienz zu weiteren Ressourceneinsparungen führen. Insbesondere könnte die Optimierungsvorgabe eine Vorgabe hinsichtlich zumindest eines zu berücksichtigenden Betriebsparameters in Kombination mit einer Vorgabe hinsichtlich zumindest eines zu berücksichtigenden Lebenszyklusparameters, insbesondere bezüglich der elektrochemischen Vorrichtung und/oder insbesondere bezüglich der zumindest einen weiteren elektrochemischen Vorrichtung, umfassen. Das Optimierungsergebnis umfasst diejenigen potentiellen Parameter, die Teil der Daten bezüglich der elektrochemischen Vorrichtung sind, und Einfluss auf den zumindest einen Parameter der Optimierungsvorgabe haben. Insbesondere könnte die Optimierungsvorgabe einen Parameter der elektrochemischen Zelle enthalten, welcher insbesondere verändert werden soll, wobei das Optimierungsergebnis eine Information darüber enthält, welche Auswirkung, beispielsweise auf die Lebensdauer der elektrochemischen Vorrichtung, eine Veränderung des Parameters hat.

Ferner wird vorgeschlagen, dass das Optimierungsergebnis zumindest eine Hierarchie hinsichtlich eines Einflusses von Daten auf die Optimierungsanfrage, insbesondere bezüglich der elektrochemischen Vorrichtung und/oder insbesondere bezüglich der zumindest einen weiteren elektrochemischen Vorrichtung, enthält. Beispielsweise, aber nicht beschränkt darauf, könnte die Optimierungsanfrage als Optimierungsvorgabe eine verbesserte Lebensdauer der elektrochemischen Zelle umfassen, wobei das Optimierungsergebnis insbesondere eine nach Einfluss gewertete Liste derjenigen Daten, beispielsweise Parameter der Herstellung und/oder des Betriebs, enthält, die Einfluss auf die Lebensdauer der elektrochemischen Zelle haben. Insbesondere könnte das Optimierungsergebnis alternativ oder zusätzlich zumindest eine Quantifizierung hinsichtlich eines Einflusses von Daten auf die Optimierungsanfrage enthalten. Beispielsweise könnte die Quantifizierung eine Information darüber enthalten, inwieweit ein bestimmter Parameter der elektrochemischen Vorrichtung verändert werden muss, um ein bestimmtes Ziel, insbesondere eine bestimmte Optimierungsvorgabe, zu erreichen. Durch eine derartige Ausgestaltung kann insbesondere eine gezielte Optimierung, beispielsweise hinsichtlich einer zu verbessernden Sicherheit und/oder Ressourcennutzung der elektrochemischen Vorrichtung, vorgenommen werden.

Zudem wird vorgeschlagen, dass die elektrochemische Vorrichtung eine Schnittstelle aufweist, mittels welcher zumindest ein Betriebsparameter der elektrochemischen Vorrichtung durch die Recheneinheit basierend auf dem Optimierungsergebnis beeinflussbar ist. Beispielsweise könnte die Recheneinheit mit der Steuer- und Regeleinheit der elektrochemischen Vorrichtung datentechnisch verbunden sein. Beispielsweise könnte die Recheneinheit mit der Steuer- und Regeleinheit der elektrochemischen Vorrichtung über ein Netzwerk, beispielsweise über das Internet, insbesondere drahtlos, verbunden sein. Insbesondere könnte die Recheneinheit der Steuer- und Regeleinheit der elektrochemischen Vorrichtung das Optimierungsergebnis bereitstellen. Insbesondere könnte die Steuer- und Regeleinheit der elektrochemischen Vorrichtung zumindest einen Betriebsparameter im laufenden Betrieb der elektrochemischen Vorrichtung basierend auf dem Optimierungsergebnis verändern. Durch eine derartige Ausgestaltung kann insbesondere ein Betrieb der elektrochemischen Vorrichtung optimiert werden. Insbesondere kann die elektrochemische Vorrichtung hinsichtlich einem ressourcensparenden und/oder leistungsstarken Betrieb, insbesondere in Echtzeit, optimiert werden.

Es wird ferner ein Verfahren zu einer Optimierung zumindest einer elektrochemischen Vorrichtung, insbesondere einer Brennstoffzellenvorrichtung, mit den Schritten vorgeschlagen:
Erfassen von Daten, insbesondere zumindest bezüglich des elektrochemischen Systems mittels einer Erfassungseinheit;
Ablegen, und insbesondere Verwalten, der Daten, insbesondere zumindest bezüglich der elektrochemischen Vorrichtung, in einer Datenbank mittels einer Verwaltungseinheit;
Speichern der Daten in zumindest einem Datensatz bezüglich der elektrochemischen Vorrichtung, in der Datenbank;
Auswählen und Bereitstellen zumindest einer Optimierungsanfrage bezüglich der elektrochemischen Vorrichtung mittels einer Triggereinheit;
Auslesen und Bereitstellen zumindest eines Teils der in der Datenbank hinterlegten Daten, bezüglich der elektrochemischen Vorrichtung, aus der Datenbank mittels einer Ausleseeinheit;
Ermitteln zumindest eines Optimierungsergebnisses, insbesondere bezüglich der elektrochemischen Vorrichtung, basierend auf der Optimierungsanfrage und den bereitgestellten Daten durch Anwenden von maschinellem Lernen durch eine Recheneinheit.

Durch die erfindungsgemäße Ausgestaltung des Verfahrens zu einer Optimierung zumindest einer elektrochemischen Vorrichtung, insbesondere einer Brennstoffzellenvorrichtung, können insbesondere verbesserte Eigenschaften hinsichtlich einer Konstruktion und/oder hinsichtlich eines Betriebs, insbesondere einer Betriebssicherheit, und/oder hinsichtlich einer Effizienz, insbesondere hinsichtlich einer Ressourceneffizienz, und/oder hinsichtlich eines Lebenszyklus, beispielsweise hinsichtlich einer Lebensdauer, zumindest einer elektrochemischen Vorrichtung, insbesondere einer Brennstoffzellenvorrichtung, erzielt, insbesondere ermittelt, werden. Beispielsweise könnte die elektrochemische Vorrichtung mit dem Ziel optimiert werden, im produktiven Betrieb weniger Ressourcen zu verbrauchen, d.h. die Effizienz zu verbessern. Zudem könnte die elektrochemische Vorrichtung beispielsweise mit dem Ziel optimiert werden, im gesamten Lebenszyklus der elektrochemischen Vorrichtung, etwa bei der Herstellung, weniger Ressourcen, beispielsweise weniger Material und/oder weniger Energie oder dergleichen zu verbrauchen. Somit kann insbesondere dadurch ein zum Betrieb einer elektrochemischen Vorrichtung notwendiger Ressourcenbedarf vorteilhaft verringert werden, dass die elektrochemische Vorrichtung basierend auf dem Optimierungsergebnis ressourcensparender produziert und/oder effizienter betrieben werden kann. Insbesondere könnte das Verfahren zur Optimierung der elektrochemischen Vorrichtung als Optimierungsergebnis den Erkenntnisgewinn ermitteln, welche Parameter im gesamten Lebenszyklus der elektrochemischen Vorrichtung verändert werden können, um eine Lebensdauer der elektrochemischen Vorrichtung und/oder eine Effizienz der elektrochemischen Vorrichtung und/oder eine Leistung der elektrochemischen Vorrichtung zu verbessern. Des Weiteren kann die elektrochemische Vorrichtung durch das vorgeschlagene Verfahren beispielsweise hinsichtlich einer Sicherheit, insbesondere hinsichtlich einer Betriebssicherheit, optimiert werden. Insbesondere könnte das Verfahren Daten einer Vielzahl von elektrochemischen Vorrichtungen, die beispielsweise historische Daten von aufgetretenen Sicherheitsproblemen anderer und/oder baugleicher elektrochemischer Vorrichtungen umfassen, berücksichtigen und dadurch beispielsweise den Einfluss bestimmter Parameter der zu optimierenden elektrochemischen Vorrichtung auf potentielle Sicherheitsprobleme ermitteln. Ferner können insbesondere dadurch Ressourcen eingespart werden, dass durch das vorgeschlagene Verfahren effizient Optimierungsergebnisse ermittelt werden können, welche ansonsten lediglich mittels einer Vielzahl von Experimenten ermittelt werden könnten. Insbesondere können Entwicklungsdauern elektrochemischer Vorrichtungen ressourcensparend verringert werden. Insbesondere kann eine Zuverlässigkeit der elektrochemischen Vorrichtung verbessert werden.

Ferner wird vorgeschlagen, dass das Optimierungsergebnis bei der Planung zukünftiger elektrochemischer Vorrichtungen berücksichtigt wird. Insbesondere wird das Optimierungsergebnis als Input bei der Planung zukünftiger elektrochemischer Vorrichtungen berücksichtigt. Insbesondere stellt das Optimierungsergebnis ein Feedback dar, welches bei Planungsprozessen zukünftiger elektrochemischer Vorrichtungen berücksichtigt wird. Insbesondere könnten basierend auf dem Optimierungsergebnis beispielsweise Fertigungstoleranzen und/oder Materialauswahlen und/oder Dimensionierungen und/oder Prozesskennzahlen bei der Planung zukünftiger elektrochemischer Vorrichtungen entsprechend geändert werden. Durch eine derartige Ausgestaltung kann insbesondere eine Ressourceneinsparung und/oder eine Sicherheit und/oder eine Zuverlässigkeit zukünftiger elektrochemischer Vorrichtungen verbessert werden.

Das erfindungsgemäße System und das erfindungsgemäße Verfahren sollen hierbei nicht auf die oben beschriebene Anwendung und Ausführungsform beschränkt sein. Insbesondere können das erfindungsgemäße System und das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System zu einer Optimierung zumindest einer elektrochemischen Vorrichtung in einer vereinfachten Darstellung,
- Fig. 2: ein Flussdiagramm eines Verfahrens zur Optimierung zumindest einer elektrochemischen Vorrichtung in einer vereinfachten Darstellung, welches zumindest teilweise von dem System ausgeführt wird,
- Fig. 3: ein Flussdiagramm eines Teils eines von einer Recheneinheit des Systems angewandten maschinellen Lernens und
- Fig. 4: ein Flussdiagramm eines Teils eines weiteren von der Recheneinheit angewandten maschinellen Lernens.

### Beschreibung des Ausführungsbeispiels

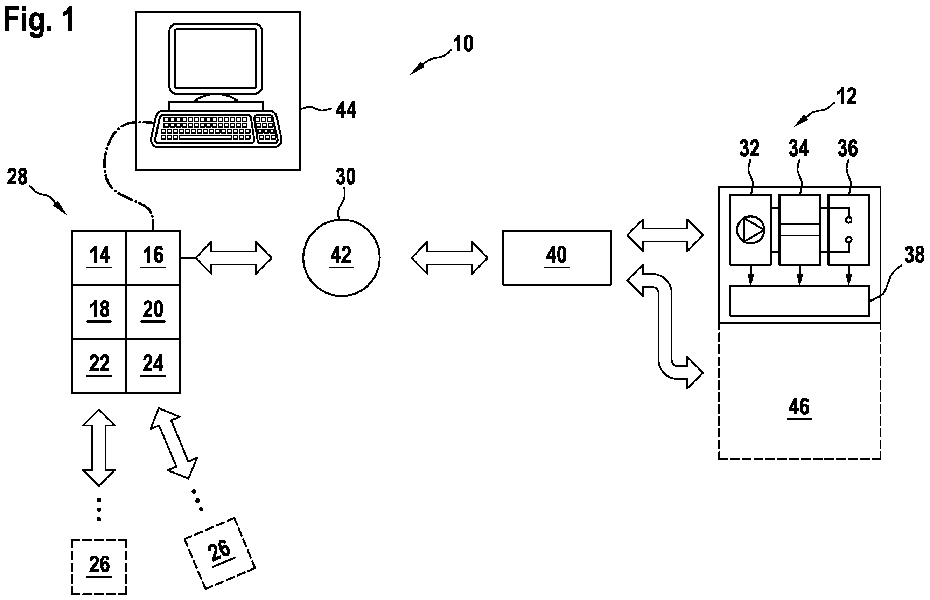

Figur 1 zeigt schematisch ein System 10 zu einer Optimierung zumindest einer elektrochemischen Vorrichtung 12. Die elektrochemische Vorrichtung 12 ist in dem vorliegenden Ausführungsbeispiel der Erfindung als eine Brennstoffzellenvorrichtung ausgebildet.

Die elektrochemische Vorrichtung 12 umfasst zumindest eine Brennstoffzelle 34. Die elektrochemische Vorrichtung 12 umfasst zumindest eine Versorgungseinheit 32 zu einer Handhabung von Betriebsfluiden der elektrochemischen Vorrichtung 12. Die elektrochemische Vorrichtung 12 umfasst eine Elektronikeinheit 36 zu einem Abgriff einer elektrischen Zellspannung und/oder eines elektrischen Zellstroms von der Brennstoffzelle 34 und/oder zu einer Versorgung der Brennstoffzelle 34 mit einer elektrischen Zellspannung und/oder einem elektrischen Zellstrom.

Die elektrochemische Vorrichtung 12 umfasst zumindest eine Sensoreinheit 38 zu einer Erfassung von Betriebsparametern der elektrochemischen Vorrichtung 12. Die elektrochemische Vorrichtung 12 umfasst eine Steuer- oder Regeleinheit 40. Zudem umfasst die elektrochemische Vorrichtung 12 weitere Komponenten 46, welche beispielsweise eine Peripherie der Brennstoffzelle 34 sein können.

Das System 10 zur Optimierung der zumindest einen elektrochemischen Vorrichtung 12 umfasst zudem eine Datenbank 14. Die Datenbank 14 ist zu einer Speicherung von Daten vorgesehen. Die Daten umfassen zumindest einen Datensatz bezüglich der elektrochemischen Vorrichtung 12.

Die Daten umfassen weitere Datensätze bezüglich zwei weiteren elektrochemischen Vorrichtungen 26. Die weiteren elektrochemischen Vorrichtungen 26 sind zu der elektrochemischen Vorrichtung 12 zumindest teilweise identisch ausgebildet und daher vorliegend lediglich vereinfacht dargestellt.

Das System 10 zur Optimierung der zumindest einen elektrochemischen Vorrichtung 12 umfasst zudem eine Erfassungseinheit 16. Die Erfassungseinheit 16 ist zu einer Erfassung der Daten zumindest bezüglich der elektrochemischen Vorrichtung 12 und bezüglich der weiteren elektrochemischen Vorrichtungen 26 vorgesehen. Das System 10 zur Optimierung der zumindest einen elektrochemischen Vorrichtung 12 umfasst zudem eine Benutzerschnittstelle 44, über welche ein Benutzer insbesondere manuelle Eingaben vornehmen kann. Die Benutzerschnittstelle 44 ist beispielsweise mit der Erfassungseinheit 16 datentechnisch verbunden, sodass zumindest ein Teil der von der Erfassungseinheit 16 erfassten Daten zumindest bezüglich der elektrochemischen Vorrichtung 12 und bezüglich der weiteren elektrochemischen Vorrichtungen 26 durch manuelle Eingaben erfasst sein könnten.

Das System 10 zur Optimierung der zumindest einen elektrochemischen Vorrichtung 12 umfasst zudem eine Verwaltungseinheit 18 zu einem Ablegen und zu einem Verwalten der Daten bezüglich der elektrochemischen Vorrichtung 12 und bezüglich der weiteren elektrochemischen Vorrichtungen 26 in der Datenbank 14.

Das System 10 zur Optimierung der zumindest einen elektrochemischen Vorrichtung 12 umfasst zudem eine Triggereinheit 20 zur Bereitstellung zumindest einer Optimierungsanfrage bezüglich der elektrochemischen Vorrichtung 12 und/oder bezüglich zumindest einer der weiteren elektrochemischen Vorrichtungen 26. Die Triggereinheit 20 ist mit der Benutzerschnittstelle 44 verbunden. Über die Benutzerschnittstelle 44 kann ein Benutzer die Bereitstellung der Optimierungsanfrage insbesondere manuell auslösen.

Das System 10 zur Optimierung der zumindest einen elektrochemischen Vorrichtung 12 umfasst zudem eine Ausleseeinheit 22. Die Ausleseeinheit 22 liest in einem Betriebszustand Daten zumindest einen Teil der in der Datenbank 14 hinterlegten Daten bezüglich der elektrochemischen Vorrichtung 12 und weiteren elektrochemischen Vorrichtungen 26 aus der Datenbank 14 aus und übermittelt diese an eine Recheneinheit 24 des Systems 10 zur Optimierung der zumindest einen elektrochemischen Vorrichtung 12.

Die Recheneinheit 24, die Ausleseeinheit 22, zumindest ein Teil der Triggereinheit 20, die Verwaltungseinheit 18, zumindest ein Teil der Erfassungseinheit 16 und die Datenbank 14 sind Teil eines Zentralservers 28. Der Zentralserver 28 ist über jeweils eine Kommunikationseinheit 42 mit der elektrochemischen Vorrichtung 12 datentechnisch verbunden.

Die Kommunikationseinheit 42 ist Teil der elektrochemischen Vorrichtung 12 und umfasst eine Schnittstelle 30, mittels welcher zumindest ein Betriebsparameter der elektrochemischen Vorrichtung 12 durch die Recheneinheit 24 basierend auf dem Optimierungsergebnis im laufenden Betrieb der elektrochemischen Zelle 12 beeinflussbar ist.

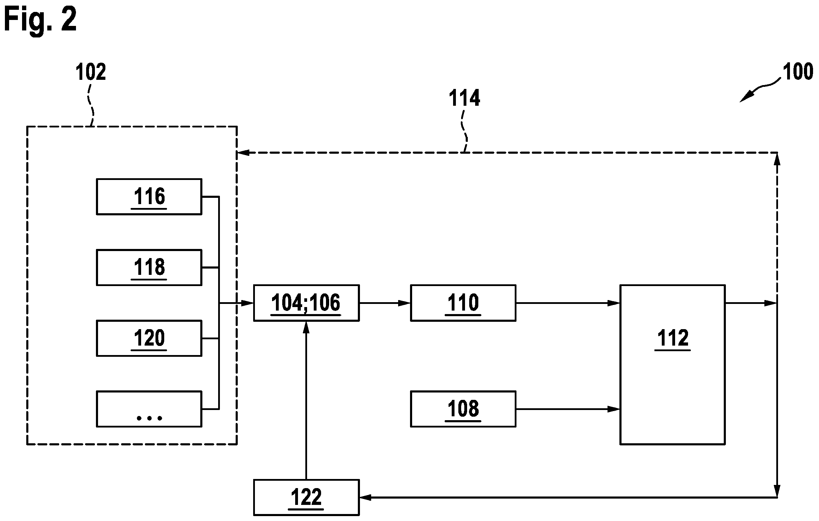

In Figur 2 ist ein entsprechendes Verfahren 100 zur Optimierung der elektrochemischen Vorrichtung 12 schematisch dargestellt. Das in Figur 2 dargestellte Verfahren 100 wird zumindest teilweise von dem System 10 zur Optimierung der zumindest einen elektrochemischen Vorrichtung 12 durchgeführt, und zwar insbesondere in zumindest einem Betriebszustand.

Das Verfahren 100 umfasst ein Erfassen 102 von Daten bezüglich der elektrochemischen Vorrichtung 12 und der weiteren elektrochemischen Vorrichtungen 26 mittels der Erfassungseinheit 16. Beim Erfassen 102 werden insbesondere Daten bezüglich der elektrochemischen Vorrichtung 12 und der weiteren elektrochemischen Vorrichtungen 26 aus einem Designprozess 116, einem Konstruktionsprozess 118, einem Fertigungsprozess 120 und aus einem Betrieb 122 der elektrochemischen Vorrichtung 12 und der weiteren elektrochemischen Vorrichtungen 26 erfasst.

Das Verfahren 100 umfasst zudem ein Ablegen 104 der Daten in der Datenbank 14 mittels der Verwaltungseinheit 18. Zudem umfasst das Verfahren 100 ein Speichern 106 der Daten in jeweils zumindest einem Datensatz bezüglich der elektrochemischen Vorrichtung 12 und bezüglich der weiteren elektrochemischen Vorrichtungen 26 in der Datenbank 14.

Zudem umfasst das Verfahren 100 ein Bereitstellen 108 zumindest einer Optimierungsanfrage bezüglich der elektrochemischen Vorrichtung 12 und/oder bezüglich der weiteren elektrochemischen Vorrichtungen 26 mittels der Triggereinheit 20.

Das Verfahren 100 umfasst zudem ein Auslesen und Bereitstellen 110 zumindest eines Teils der in der Datenbank 14 hinterlegten Daten, bezüglich der elektrochemischen Vorrichtung 12 und/oder der weiteren elektrochemischen Vorrichtungen 26, aus der Datenbank 14 mittels der Ausleseeinheit 22. Das Verfahren 100 umfasst zudem ein Ermitteln 112 zumindest eines Optimierungsergebnisses bezüglich der elektrochemischen Vorrichtung 12 und/oder bezüglich der weiteren elektrochemischen Vorrichtungen 26, basierend auf der Optimierungsanfrage und den bereitgestellten Daten durch Anwenden von maschinellem Lernen durch die Recheneinheit 24.

Zudem umfasst das Verfahren 100 ein optionales Rückleiten von Feedback 114, welches insbesondere das Einbringen des Optimierungsergebnisses und/oder davon abgeleitete Informationen in einen Designprozess 116 und/oder in einen Konstruktionsprozess 118 und/oder in ein Fertigungsprozess 120 zukünftiger elektrochemischer Vorrichtungen umfasst.

Beispielsweise lässt sich beim Bereitstellen der Optimierungsanfrage, insbesondere durch einen Benutzer, mittels der Triggereinheit 20 eine Optimierungsvorgabe festlegen, welche beispielsweise ein Betrieb der elektrochemischen Vorrichtung 12 mit möglichst hoher Leistung sein könnte. Das Optimierungsergebnis, welches beim Ermitteln 112 von der Recheneinheit 24 ermittelt wird, enthält ein Ranking derjenigen Parameter, die Einfluss auf die gewünschte hohe Leistung haben. Dabei könnten die Parameter des Optimierungsergebnisses beim Betrieb 122 und/oder beim Designprozess 116 und/oder beim Konstruktionsprozess 118 und/oder beim Fertigungsprozess 120 Einfluss auf die beispielhaft zu verstehende gewünschte hohe Leistung der elektrochemischen Vorrichtung 12 und/oder der weiteren elektrochemischen Vorrichtungen 26 haben.

Das System führt beispielsweise das Verfahren 100, insbesondere die Verfahrensschritte 104 bis 112 und 122 wiederkehrend, insbesondere periodisch, automatisch aus. Die Recheneinheit 24 ermittelt das Optimierungsergebnis basierend auf der Optimierungsanfrage und den bereitgestellten Daten durch Anwendung von maschinellem Lernen wiederkehrend, insbesondere periodisch, automatisch und ändert bei Bedarf, d.h. zum Erreichen der Optimierungsvorgabe, Betriebsparameter im laufenden Betrieb der elektrochemischen Vorrichtung 12 basierend auf dem Optimierungsergebnis ab.

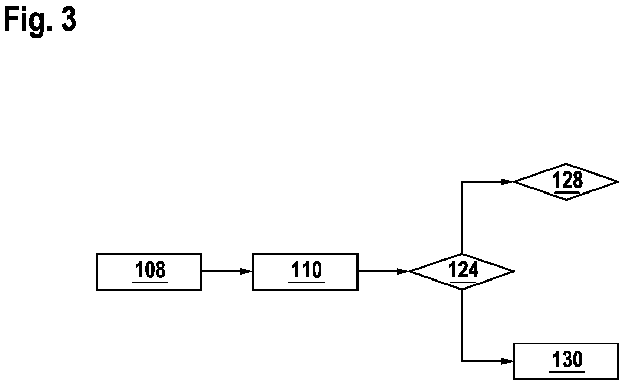

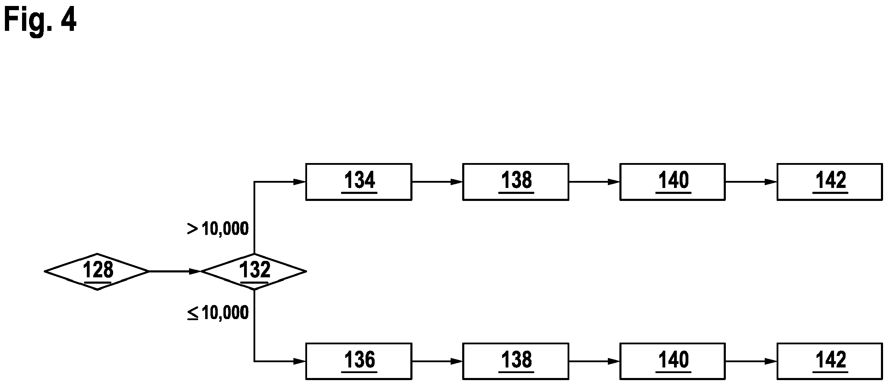

In den Figuren 3 und 4 ist schematisch das von der Recheneinheit 24 angewandte maschinelle Lernen zur Ermittlung des Optimierungsergebnisses dargestellt. Figur 3 beschreibt schematisch eine von der Recheneinheit 24 durchgeführte Entscheidung 124, ob zur Ermittlung des Optimierungsergebnisses, basierend auf der bereitgestellten Optimierungsanfrage 108 und den ausgelesenen und bereitgestellten Daten 110 Überwachtes Lernen 128 oder Unüberwachtes Lernen 130 durchgeführt wird.

Falls die Optimierungsanfrage eine Optimierungsvorgabe enthält, führt die Recheneinheit 24 Überwachtes Lernen 128 basierend auf der Optimierungsvorgabe und den Daten bezüglich der elektrochemischen Vorrichtung 12 und/oder bezüglich der weiteren elektrochemischen Vorrichtungen 26 durch.

Falls die Optimierungsanfrage lediglich einen Optimierungsauslöser enthält, führt die Recheneinheit 24 Unüberwachtes Lernen 130 basierend auf den Daten bezüglich der elektrochemischen Vorrichtung 12 und/oder bezüglich der weiteren elektrochemischen Vorrichtungen 26 durch.

Für den Fall, dass gemäß Figur 3 Überwachtes Lernen 128 durchgeführt wird, beschreibt Figur 4 schematisch eine von der Recheneinheit 24 durchgeführte Auswahl, welchen Machine-Learning Algorithmus die Recheneinheit 24 basierend auf einer vorhandenen Datenmenge durchführt. Dabei wird im Rahmen der weiteren Entscheidung 132 anhand einer Datengrenzmenge entschieden, ob ein Satz erster Algorithmen 134 oder ein Satz weiterer Algorithmen 136 durchgeführt wird.

Die Datengrenzmenge könnte beispielsweise, jedoch nicht beschränkt darauf, zumindest 5.000 Datenpunkte, zumindest 10.000 Datenpunkte oder zumindest 20.000 Datenpunkte umfassen, wobei bei einer vorhandenen Datenmenge, die größer als die Datengrenzmenge ist, zumindest ein Algorithmus des Satzes erster Algorithmen 134 durchgeführt wird. Für den Fall, dass die vorhandene Datenmenge kleiner als die Datengrenzmenge ist, wird zumindest ein Algorithmus des Satzes weiterer Algorithmen 136 durchgeführt.

Der Satz erster Algorithmen 134 umfasst beispielsweise die Anwendung von neuronalen Netzwerken. Der Satz weiterer Algorithmen 136 umfasst beispielsweise die Anwendung von Regressionsanalysen, Tree-based Methoden, einer Support-Vektor Machine oder eines GP-Algorithmus. Im Anschluss erfolgt durch die Recheneinheit 24 ein Training 138, ein Testen 140 und ein Anwenden 142 des jeweiligen Algorithmus.

## Patentansprüche

1. System (10) zu einer Optimierung zumindest einer elektrochemischen Vorrichtung (12), insbesondere einer Brennstoffzellenvorrichtung, aufweisend:
eine Datenbank (14) zu einer Speicherung von Daten, welche zumindest einen Datensatz bezüglich der elektrochemischen Vorrichtung (12) umfassen,
eine Erfassungseinheit (16) zu einer Erfassung der Daten,
eine Verwaltungseinheit (18) zu einem Ablegen der Daten in der Datenbank (14),
eine Triggereinheit (20) zur Bereitstellung zumindest einer Optimierungsanfrage bezüglich der elektrochemischen Vorrichtung (12),
eine Ausleseeinheit (22), welche in einem Betriebszustand Daten aus der Datenbank (14) ausliest und bereitstellt,
eine Recheneinheit (24), welche basierend auf der Optimierungsanfrage und den bereitgestellten Daten durch Anwendung von maschinellem Lernen zumindest ein Optimierungsergebnis ermittelt.

2. System (10) nach Anspruch 1, **dadurch gekennzeichnet, dass** die Recheneinheit (24) das Optimierungsergebnis basierend auf der Optimierungsanfrage und den bereitgestellten Daten durch Anwendung von maschinellem Lernen wiederkehrend automatisch ermittelt.

3. System (10) nach einem der vorhergehenden Ansprüche, **dadurch gekennzeichnet, dass** die Daten zumindest einen Datensatz hinsichtlich eines bisherigen Lebenszyklus der elektrochemischen Vorrichtung (12) umfassen.

4. System (10) nach einem der vorhergehenden Ansprüche, **dadurch gekennzeichnet, dass** die Daten zumindest einen weiteren Datensatz bezüglich zumindest einer weiteren elektrochemischen Vorrichtung (26) umfassen.

5. System (10) nach einem der vorhergehenden Ansprüche, **dadurch gekennzeichnet, dass** die Recheneinheit (24) Teil eines Zentralservers (28) ist.

6. System (10) nach einem der vorhergehenden Ansprüche, **dadurch gekennzeichnet, dass** die Optimierungsanfrage eine Optimierungsvorgabe umfasst.

7. System (10) nach Anspruch 5, **dadurch gekennzeichnet, dass** die Optimierungsvorgabe eine Vorgabe hinsichtlich zumindest eines zu berücksichtigenden Lebenszyklusparameters umfasst.

8. System (10) nach Anspruch 5 oder 6, **dadurch gekennzeichnet, dass** die Optimierungsvorgabe eine Vorgabe hinsichtlich zumindest eines zu berücksichtigenden Betriebsparameters umfasst.

9. System (10) nach einem der vorhergehenden Ansprüche, **dadurch gekennzeichnet, dass** das Optimierungsergebnis zumindest eine Hierarchie hinsichtlich eines Einflusses von Daten auf die Optimierungsanfrage enthält.

10. System (10) nach einem der vorhergehenden Ansprüche, **dadurch gekennzeichnet, dass** die elektrochemische Vorrichtung (12) eine Schnittstelle (30) aufweist, mittels welcher zumindest ein Betriebsparameter der elektrochemischen Vorrichtung (12) durch die Recheneinheit (24) basierend auf dem Optimierungsergebnis beeinflussbar ist.

11. Verfahren (100) zu einer Optimierung zumindest einer elektrochemischen Vorrichtung (12), insbesondere einer Brennstoffzellenvorrichtung, insbesondere mittels eines Systems (10) nach einem der vorhergehenden Ansprüche, mit den Schritten:
Erfassen (102) von Daten, insbesondere zumindest bezüglich des elektrochemischen Systems mittels einer Erfassungseinheit (16);
Ablegen (104) der Daten in einer Datenbank (14) mittels einer Verwaltungseinheit (18);
Speichern (106) der Daten in zumindest einem Datensatz bezüglich der elektrochemischen Vorrichtung (12), in der Datenbank (14);
Bereitstellen (108) zumindest einer Optimierungsanfrage bezüglich der elektrochemischen Vorrichtung (12) mittels einer Triggereinheit (20);
Auslesen und Bereitstellen (110) zumindest eines Teils der in der Datenbank hinterlegten Daten, bezüglich der elektrochemischen Vorrichtung (12), aus der Datenbank (14) mittels einer Ausleseeinheit (22);
Ermitteln (112) zumindest eines Optimierungsergebnisses basierend auf der Optimierungsanfrage und den bereitgestellten Daten durch Anwenden von maschinellem Lernen durch eine Recheneinheit (24).

12. Verfahren (100) nach Anspruch 11, **dadurch gekennzeichnet, dass** das Optimierungsergebnis bei der Planung zukünftiger elektrochemischer Vorrichtungen berücksichtigt wird.
